(19) Europäisches Patentamt
European Patent Office
Office européen des brevets

(11) **EP 1 440 789 B1**

(12) **EUROPEAN PATENT SPECIFICATION**

(45) Date of publication and mention
of the grant of the patent:
**25.04.2007 Bulletin 2007/17**

(51) Int Cl.:
*G06F 17/50* (2006.01)  *B60C 3/00* (2006.01)
*B29D 30/00* (2006.01)

(21) Application number: **04002535.5**

(22) Date of filing: **06.07.2001**

(54) **Method for the production of tyres**

Verfahren zur Reifenherstellung

Procédé de production de pneumatiques

(84) Designated Contracting States:
**AT BE CH CY DE DK ES FI FR GB GR IE IT LI LU MC NL PT SE TR**

(30) Priority: **11.07.2000 EP 00114840**
**18.07.2000 US 218834 P**

(43) Date of publication of application:
**28.07.2004 Bulletin 2004/31**

(62) Document number(s) of the earlier application(s) in accordance with Art. 76 EPC:
**01965072.0 / 1 299 825**

(73) Proprietor: **Pirelli Tyre S.p.A.**
**20126 Milano (IT)**

(72) Inventors:
• **Caretta, Renato**
**21013 Gallarate (VA) (IT)**
• **Cantu', Marco**
**20040 Carnate (MI) (IT)**
• **Gaiazzi, Stefano**
**21040 Quinzano di Sumirago (VA) (IT)**

• **Mervic, Stefano**
**20040 Burago Molgora (MI) (IT)**

(74) Representative: **Bottero, Carlo et al**
**Pirelli & C. S.p.A.,**
**Industrial Property Department,**
**Viale Sarca, 222**
**20126 Milano (IT)**

(56) References cited:
**EP-A- 0 448 407       EP-A- 0 642 916**
**EP-A- 0 865 890       EP-A- 0 875 365**
**EP-A- 0 937 570       EP-A- 0 953 834**
**US-A- 5 089 970       US-A- 5 278 751**
**US-A- 5 764 543       US-A- 5 822 206**

• **DATABASE WPI Week 9818 Derwent Publications Ltd., London, GB; AN 1998-203002 XP002155594 & JP 10 055348 A (BRIDGESTONE) 24 February 1998 (1998-02-24)**
• **DATABASE WPI Week 200020 Derwent Publications Ltd., London, GB; AN 2000-232429 XP002155595 & JP 2000 052716 A (BRIDGESTONE) 22 February 2000 (2000-02-22)**

**Description**

The present invention relates to a method for designing and manufacturing tyres with the aid of a computer and an information data base.

In particular, the invention relates to a method for designing and manufacturing a tyre with given performance features, whereby the dimensions of the structural parts of the tyre are defined using a set of correlations between said structural parts, which is associated with the desired performance features of said tyre.

The invention also relates to a method for designing and manufacturing a series of tyres, whereby the dimensional characteristics of said series of tyres are automatically calculated on the basis of a reference tyre, the structure of which is automatically modified (method referred to in short as "parameterization") by applying a set of correlations between the structural components of said reference tyre and the corresponding structural components of the tyres in said series.

The abovementioned set of correlations is used to obtain, from those of the reference tyre, the dimensional characteristics of the structural parts of said tyres in said series characterized by the fact of having, with respect to said set, a same or different size and similar or different behavioural characteristics.

The invention relates, in addition, to an integrated method for designing and manufacturing tyres, whereby the results of the different design phases are automatically converted into operating instructions for the tyre assembly machinery.

The invention also relates to a method for designing tyres, in which the design phases are at least partially determined by information or requests received, preferably in real time, from a telecommunications network (the Internet) which interfaces a processing system of the tyre manufacturer (server system) with a processing system of the client (client system).

In particular, the invention relates to a method for designing tyres, in which said information includes requests chosen by the client from within an array of options relating to dimensional and/or performance requisites of the tyre, said array being provided by the manufacturer.

As is known, in the less recent tyre designing systems, a tyre is designed on the basis of a predefined series of dimensional constraints and performance characteristics which are defined depending on the clients' requirements and are processed by the design engineer, with the aid of his/her experience and technical knowledge, until it is possible to produce a production specification substantially consisting of a table which structurally describes all the constituent parts (semi-finished products) of the new tyre, defining geometrical dimensions, materials used and processing methods.

On the basis of this table, the operating unit (factory) supplies the necessary materials, machinery and equipment and, following predefined procedures, manufactures the various semi-finished products and assembles them together so as to form a rough-finished tyre. The rough-finished tyres are vulcanized in special moulds which define the external appearance of the tyre. The product then undergoes a series of checks before being authorized for sale.

The design of tyres performed with the aid of a computer has recently been developed.

The patent US 5,710,718 describes a method for designing a tyre, comprising the following steps:

- identifying a basic tyre model represented by a cross section of the said tyre including all the structural parts thereof;

- selecting a plurality of physical reference parameters for evaluating the performance features of the said tyre;

- selecting dimensional values defining the overall dimensions of the tyre, its cross section and the structure of the said tyre, and a plurality of physical parameters;

- defining, in connection with said dimensional values, a range of maximum deviation of the structural parts of the basic model within the cross section, for the purposes of performing an optimization calculation of said parameters;

- varying the value of the range of maximum deviation until one obtains, by means of an optimization calculation, an optimum value of said physical parameters which is comparable with the values of said reference values;

- redesigning the tyre on the basis of the range of maximum deviation which resulted in optimization of said reference parameters.

EP 0 448 407 A2 is related to a method of manufacturing green tyres having different sizes. An automatic tyre building line and a component manufacturing section are coupled with each other by means of a component supplying section and the components manufactured in the component manufacturing section are directly supplied into the substantially flat component feeding paths of the component stocking and feeding devices and then the components having desired sizes are selectively supplied into the automatic tyre building line.

US 5,278,751 is related to a dynamic manufacturing process control. The method disclosed in the above patent uses a knowledge based expert system in combination with QFD (Quality Function Deployment) principles to provide an interactive system capable of allowing dynamic changes to a manufacturing process in response to customer input regarding their requirements and ultimate satisfaction. The system expands upon a central element of QFD analysis, relationships between objects, by providing navigation and manipulation aids. Dynamic evaluation is possible and enables the detection of shifts in customer preference or needs.

The patent application EP 953,834 describes a method for designing tyres, in which a basic tyre model is initially configured. A first set of variables is applied to said basic model and is used to determine conditions of the contact patch of the modelled tyre. These conditions are compared with corresponding predefined conditions of said contact patch in order to check whether the two conditions compared are convergent. If this is not so, the set of variables is incremented so as to produce new conditions for the contact patch of the modelled tyre, until values which converge towards these predefined conditions are obtained.

The set of variables considered comprises the potential wear of the tyre for which the model has been produced, the radial load exerted on the said tyre and the operating pressure.

The Applicants have observed that, in the state of the art described, the design of a new tyre comprises the step of choosing a basic tyre model, predetermining conditions or constraints representing a predefined behaviour, or predefined performance features of the new tyre, and then obtaining by means of subsequent approximations an additional tyre model which complies with the constraints predetermined at the start of the design phase, repeating a process involving modifications to and corresponding verification of the said basic model.

Recently the Applicants have developed a new method for manufacturing tyres which has eliminated the semi-finished products used in the prior art, for example the tread band, the sidewall strips, the carcass plies, the belt strips and the bead wires, just to mention a few of them. These are now replaced by only three different types of basic components which are substantially the same for any tyre and by means of which the structural parts which make up the tyre to the produced are constructed directly on a toroidal support. These three types of components are, respectively, the compound, the reinforcing cord and a rubberized fabric tape (band) consisting of a listel of compound containing two or more reinforcing cords.

The person skilled in the art, depending on the his/her different requirements and the technology available, will also be able to use a different number of basic components, for example only compounds and reinforcing cords, for example as described in the patent EP 664,232.

It is pointed out here that, in the present description, the term "reinforcing cord" refers to both individual strands and cords formed by a plurality of said strands wound together in a manner known per se.

The abovementioned toroidal support, referred to below as a drum, is a collapsible rigid support which may be extracted from the finished tyre and the radially external profile of which preferably matches the radially internal profile of the rough-finished tyre.

Except in particular cases, a tyre normally comprises several compounds of different types, for example eight compounds. The reinforcing cords may be made from textiles (usually rayon, nylon or Kevlar™) or metal, in particular with the strands consisting of HT (high tensile) steel, i.e. with a high carbon content. The bands may also be made from textiles or metal, depending on the type of cord incorporated. The Applicants prefer to use bands containing 2 to 10 cords.

The Applicants have also modified the process for assembly of the tyre, essentially eliminating the steps comprising direct movements parallel to the axis of the assembly drum, for example positioning of the bead wires, the backfolds of the ends of the carcass plies or the application of the sidewalls against the carcass, just to mention the most important ones.

This new process for assembly of the tyre is carried out by means of deposition, on the abovementioned drum, of the components designed to form the structural parts of the tyre (substantially corresponding to the parts made with the known semi-finished products according to the state of the art) using two types of movement, i.e. radial deposition, directed towards the axis of rotation of the drum, and circumferential deposition onto the surface of the drum made to rotate about its axis, or a combination of the two.

More precisely, the basic components are supplied to said drum in the form of continuous elongated parts. In a preferred embodiment, the radially deposited components are cut beforehand into portions of predefined size, while the circumferentially deposited components are cut after winding onto the drum.

These basic components have preferably a cross section with dimensions smaller than those of the structural part to be constructed and, except for the cord, preferably have a substantially rectangular shape.

More particularly, a drum is supported in cantilever fashion by the arm of a robot which is preferably of the anthropomorphic type with seven axes of rotation and which may orient the drum into any spatial position, by means of translation and/or rotation of the arm, with respect to the position for supplying of the basic component.

Typically, in this process, the band portions which form the carcass ply or plies and the belt strips are deposited with a radial movement, while the listels of compound and the reinforcing cords oriented at 0° are deposited with a spiral circumferential movement.

Preferably, the listels of compound are deposited under tension, depending on the type of composition; resulting in a stretched state of between 30% and 70% with respect to the initial length.

In particular, the carcass plies and the belt strips are constructed by depositing on the drum a circumferential succession of said pre-cut band portions by means of step-by-step rotation of the said drum. The width of the band, the angle of rotation which the drum must perform after deposition of each portion and, in the case of the belts, also the relative angle between the axis of rotation of the drum and the axis of the band portion are determined beforehand.

In a different process, according to the patent EP 664,232, radially deposited components are radially deposited on the drum with a continuous alternating movement around the torus-shaped surface of the said drum, while the latter rotates about its axis. In combination with this technology, structural parts consisting of the compound alone may be applied using a controlled-volume injection process.

The Applicants have ascertained that the abovementioned process comprising radial and circumferential movements allows a very high degree of flexibility during planning of the various tyre models to be made since, owing to the substantial similarity of the basic components for each type of tyre, it is possible to produce a sequence of tyres in which each tyre may be different from the preceding one.

In fact only the number of revolutions of the drum for the components applied circumferentially and the axial extension of the radially applied components may vary from tyre to tyre.

The Applicants have now found that the abovementioned method for manufacturing tyres, i.e. by means of deposition of the components with a radial or circumferential movement or a combination of the two, also allows a very high degree of flexibility during design of the tyre. The Applicants have furthermore found that this method allows the possibility of automating, preferably on the basis of the structure of a reference tyre, from now on referred to as "prototype", the design of other tyres with the same or different size and with the same or different performance features. This invention may also be applied to different tyre production methods.

The Applicants have realized that the construction of structural parts of the tyre using listels of compound with small cross sectional dimensions, i.e. dimensions which are a submultiple of the final dimensions of the cross section of the structural part in question, is able to overcome a significant constraint according to the prior art. The need to use a separate series - as regards dimensions - of semi-finished products in order to obtain structural parts prevented the structural parts themselves from being regarded as a continuous function with regard to their dimensions.

Analysing a series of prototypes designed in the manner indicated, the Applicants have found that the type and degree of behavioural performance of the tyre (for example the comfort in relation to stability at high speed or grip on wet surfaces) may be associated with particular correlations between given dimensional values of said structural parts of the tyre.

The Applicants have realized and ascertained experimentally that maintaining said correlations in the structure of tyres having dimensions different from those of the prototype allowed said tyres to be assigned a type and level of performance in keeping with those of the abovementioned prototype.

The Applicants have realized and ascertained experimentally that changing said correlations in the structure of tyres having dimensions the same as or different from those of the prototype allowed said tyres to be assigned a type and level of performance different from those of the prototype. In the most complex case, if the set of correlations which associates the structure of the tyre with a given type of behavioural performance is known, according to the invention proposed by the Applicants, it is possible to convert automatically the definitive structure (dimensional values) of at least one prototype into the definitive structure of other tyres which are dimensionally different from the prototype and have the required performance features different from those of the prototype.

The Applicants have found that the knowledge of several sets of correlations and the performance features associated with each set allows the design engineer to define automatically, on the basis of a prototype with a known structure, for each tyre type different from the prototype, the structure most suited for the type of performance required.

Within the context of the present invention, the term "tyre structure" is understood as meaning essentially the set of the geometrical forms and materials which characterize the cross section of the tyre. In this context, the geometrical forms of the individual structural parts are associated with each other by means of mathematical functions or, preferably, sets of mathematical functions, found to be efficient in the optimization of particular performance features of the tyre.

In this way, the tyre design process does not define the absolute values of the geometrical parameters which describe a structure, but the "functional" rules by means of which said geometrical forms interact with each other depending on a given category of performance features.

Verification of said functional correlation rules may be performed by means of simulation using mathematical calculation, for example finite element analysis (FEA) or by means of acquisition of experimental know-how.

In accordance with the invention, the design process converts, moreover, the absolute values of the geometrical parameters of a given tyre structure into the absolute values of the geometrical parameters of a different tyre structure.

According to a first aspect thereof, the invention relates to a method according to claim 1.

Preferred embodiments of the invention are defined in the dependent claims.

Further characteristic features and advantages of the present invention will emerge in greater detail from the following description and with reference to the accompanying drawings provided solely by way of a nonlimiting example.

In particular:

Figure 1 shows a partial cross section of the structure of a tyre according to the present invention illustrating in particular the structural parts forming part of said section configured in accordance with the profile of the vulcanization mould;

Figure 2 shows the external and internal profiles which delimit the cross section of the tyre according to Figure 1, configured on the assembly drum;

Figure 3 shows the external profile of a tyre in the configuration according to Figure 1, with the radii of curvature in certain points indicated by p and the associated heights by y;

Figure 4 shows a cross section of a basic component, consisting of a listel of compound;

Figure 5 shows a small portion of the cross section of a drum on the assembly drum, in which partial deposition of the basic component according to Figure 4 is illustrated.

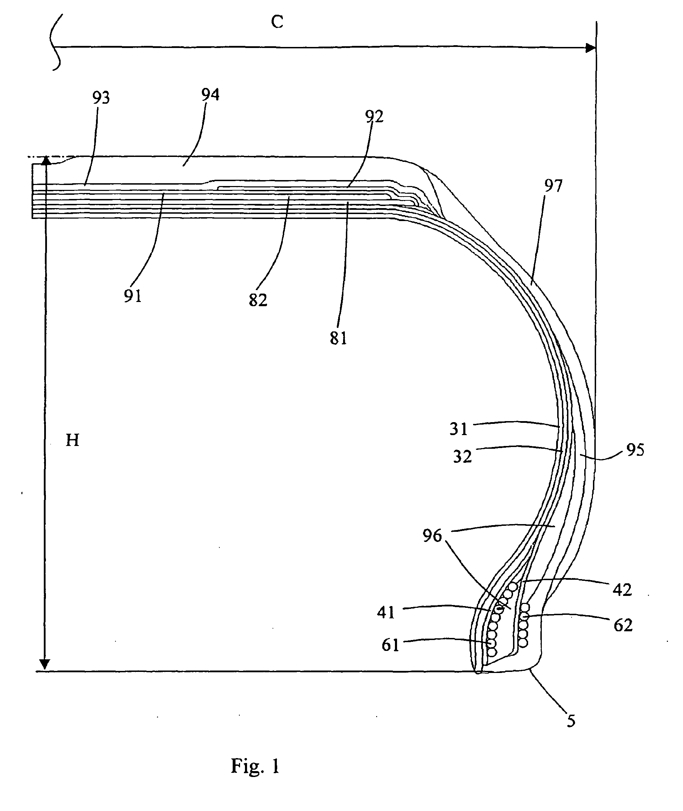

Figure 1 shows a radially sectioned view of the general structure of a tyre for vehicle wheels, designed in accordance with the present invention.

Traditionally, the tyre consists of an internally hollow, toroidal, structure, usually known as a carcass, comprising a plurality of structural parts which are assembled together and having two beads each defined along an internal circumferential edge thereof for fixing the tyre onto a mounting rim. Said carcass comprises firstly at least one carcass ply and at least one pair of annular reinforcing cores, usually called bead wires, which are circumferentially unextendable and contained inside said beads, i.e. at least one bead wire per bead.

The carcass ply includes a support structure, which comprises textile or metal cords and the end edges of which are each associated with a corresponding bead wire and which axially extends from one bead to the other so as to form said toroidal structure.

In tyres of the so-called radial type, the abovementioned cords lie essentially in planes containing the axis of rotation of the tyre or slightly removed therefrom.

This carcass is provided, on its crown, with an annular overstructure, known as a belt structure, which is normally composed of one or more rubberized fabric strips, which are radially superimposed on each other so as to define a so-called "belt pack", and a tread band made of elastomer material, wound around the belt pack and provided with a moulded design in relief for the rolling contact of the tyre on the road. Moreover, the carcass is provided, in axially opposite lateral positions, with two sidewalls which are made of elastomer material and each of which extends radially towards the outside from the external edge of the corresponding bead.

In tyres of the so-called tubeless type, i.e. of the type which do not require the use of an inner tube during operation, the internal surface of the carcass is normally lined with a so-called liner, namely one or more layers of elastomer material which are impermeable to air. Finally, the carcass may comprise other known parts, such as reinforcements, listels and fillings of a number and type depending on the specific tyre model to be made.

It must be pointed that, for the purposes of the present description, the term "elastomer material" is understood as meaning a rubber compound in its entirety, i.e. the assembly formed by at least one polymer base suitably combined with reinforcing fillers and/or process additives of various types.

In particular, the cross section according to Figure 1, shows, progressing radially from the inside towards the outside, some of the abovementioned structural parts, i.e. a first liner layer 31 and a second liner layer 32, the ends of a first series of band portions 41 of a carcass ply 40 and the ends of a second series of band portions 42 of said carcass ply.

In the bead zone of the tyre, moreover, a first bead wire comprising nine cord turns 61 and a second bead comprising five cord turns 62 are shown. The crown zone of the tyre is provided with a belt pack comprising a first belt strip 81 and a second belt strip 82 which are arranged on top of each other, a first layer 91 of nylon cords oriented at 0°, which covers all the belt layers and a pair of layers 92 of nylon cords oriented at 0°, which cover only the end zones of the belt strips.

A tread band 94 provided with an underlayer 93 is arranged on top of the above layers.

The bead zone is also provided with a first filling of anti-abrasive compound 95 and a pair of fillings 96 made of compound with a high hardness factor and arranged in the bead zone, i.e. one between the first band portions 41 and the second band portions 42, the other between the second band portions 42 and the anti-abrasive filling 95. A pair of sidewalls 97 radially extending from the bead zone to the shoulder zone of the tyre line the carcass and come into contact with the side edges of the tread band 94.

The definition of the tyre structure within its cross section defines the whole tyre since it is a solid of rotation.

According to the invention, the cross section of the tyre and each of the structural parts forming part thereof have, associated with them, a first group of absolute dimensional values and a second group of dimensional values which can be modified.

The absolute values may be chosen from a range of possible values, but once they have been chosen they cannot be changed within the same design model since they define dimensional and structural constraints thereof, which must be complied with. As regards the tyre cross section, absolute values are, for example, the external diameter, the maximum cord during inflation and the fitting diameter, i.e. the overall dimensions of the tyre.

As regards the basic components, the absolute values are, for example, the dimensions of the reinforcing cords, the thickness of the band and the cross sectional dimensions of the listel.

In particular, as regards the basic components, initially the width of the pre-cut band portions (for example the portions of the carcass plies and the portions of the belt strips) and the width and the height of the listel are chosen and, in accordance with these values, the dimensions of the nozzles of the extruders supplying the elastomer material are defined.

The values which may be modified are those which may vary in accordance with predetermined correlation equations, in order to comply with given congruency conditions.

As regards the tyre cross section, values which may be modified are, for example, the tread width, the value of the cross sectional ratio H/C (cross sectional height/maximum chord), and the height and curvature of the sidewalls.

As regards the structural parts of the tyre, values which may be modified are, for example, some geometrical dimensions, for example the linear extension of the band and the dimensions and shape of the elastomer structural parts.

Each tyre model is essentially distinguished from the other models by a set of chemical and physical, structural, dimensional and external appearance characteristics and by its peculiar performance characteristics, such as handling, comfort, roadholding, noisiness, etc.

The chemical and physical characteristics are essentially dependent upon the type and composition of the materials, in particular the formulations of the various compounds used in the manufacture of the elastomer materials. The structural characteristics essentially define the number and the type of the structural parts present in the tyre and their mutual position within the structure of the latter.

The dimensional characteristics refer to the geometrical measurements and to the cross-sectional profile of the tyre (external diameter, maximum chord or width, height of the sidewall and height/chord ratio, i.e. cross sectional ratio) and will be referred to hereinbelow simply as "size" or "sizes". The external appearance characteristics comprise, typically, sculpting of the tread rolling surface, ornamental patterns and various writing or distinguishing symbols reproduced on the tyre, for example on the tyre sidewalls, and in the remainder of the present description will be referred to overall - albeit in an improper manner - as "tread pattern".

In the following description, for the purposes of the present invention, the following are also defined:

- tyre model: a tyre having a predefined size, predefined structural parts in its cross section and a predefined tread pattern;

- inflation profile of the carcass: the profile along the neutral axis of the carcass plies within the tyre cross section, in the tyre inflated to its nominal operating pressure under zero load conditions;

- moulding profile of the tyre: the external profile of the tyre corresponding to the profile of the vulcanization mould with which the external surface of the tyre comes into contact during the vulcanization step;

- tyre assembly profile: the internal profile of the tyre, preferably corresponding to the profile of the assembly drum with which the internal surface of the tyre remains in contact during construction of the said tyre;

- carcass equilibrium profile: the profile along the neutral axis of the carcass plies within the cross section of the tyre inflated to its operating pressure under zero load conditions. This profile satisfies the equation:

$$\rho \bullet y = K \bullet p = \text{CONST}$$

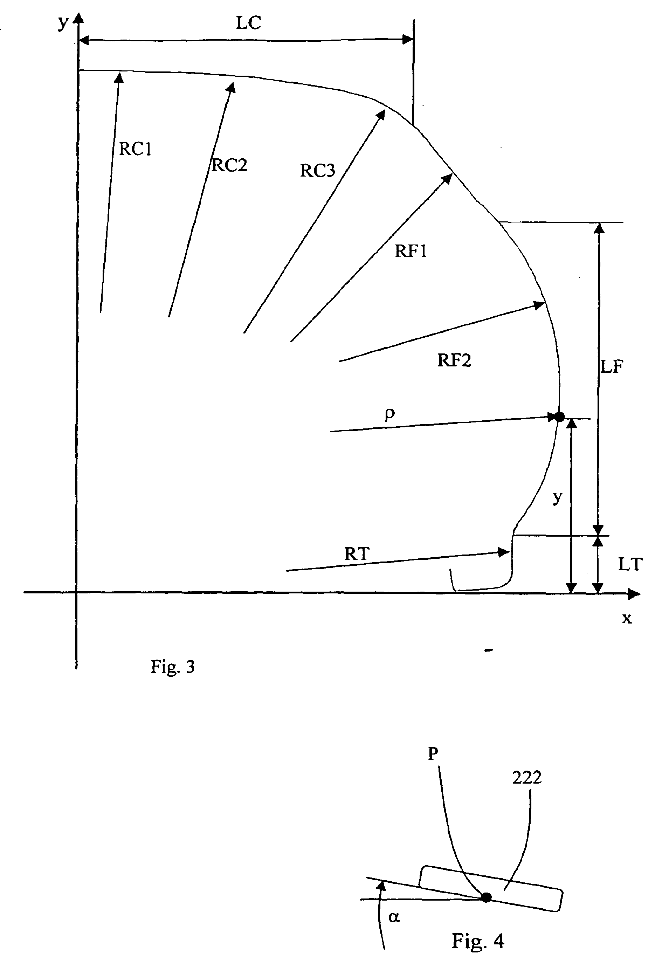

where $\rho$, y have the meaning defined above and are indicated in Figure 3, $\rho$ is the value of the inflation pressure and K is a constant.

A tyre, the carcass of which has an inflation profile substantially aligned with the equilibrium profile along at least a portion of its extension, distributes in an optimum manner, and in particular minimizes, the stresses generated by the vehicle and the road within the tyre structure during operation.

Let us now assume that it is required to design a new tyre which has a main specific performance compared to the set of performance features which each tyre must have, for example a tyre for a very good driving performance (directional stability, road holding, slip thrust, responsive steering, etc.), whereby the characteristics such as comfort, noisiness, abrasion resistance, etc. assume less importance. For the sake of convenience, we shall define below such a tyre as being "handling oriented".

In this example, the tread pattern is preferably designed and defined using conventional techniques. The design engineer, on the basis of his technical knowledge, his experience and his knowledge of the structure of known tyres which have proved to possess a good qualitative level as regards the same specific performance, fixes the absolute values within the first group (absolute values); this group of values, as mentioned above, includes dimensional, structural and functional parameters.

A first data entry mask stores the predefined dimensional parameters, which comprise the significant parameters which define at least one of said (moulding, assembly or carcass) profiles.

In the example illustrated in Figure 1, the cross section of the tyre has been obtained on the basis of the moulding profile of the tyre.

A design method, which may be developed in a known manner, defines preferably automatically the moulding profile of the tyre by means of entry of said significant parameters into said first data entry mask within which each item of data is stored in a corresponding field.

These significant parameters, which are associated with the external profile, preferably comprise (as shown in Figure 3):

- size of the tyre to be manufactured;

- maximum dimensions of said external profile of the tyre (height of section H, maximum chord C);

- dimensions of the external profile in the crown zone of the tyre LC;

- dimensions of the external profile of the sidewall of the tyre LF;

- dimensions of the external profile of the bead of the tyre LT.

The abovementioned significant parameters of the external profile of the crown, sidewall and bead of the tyre result in a subdivision of the external profile of the tyre into several segments each having a respective radius of curvature. In particular, in the example shown in Figure 3, a first crown sector with a radius of curvature RC1, a second crown sector with a radius of curvature RC2, a shoulder sector with a radius of curvature RS1, a first sidewall sector with a radius of curvature RF1, a second sidewall sector with a radius of curvature RF2 and a bead sector with a radius of curvature RT.

The structural parameters consist of the number, type and mutual position of the structural parts which form the tyre model being designed, as well as the characteristics of the basic component of each of them. These structural parameters may be defined by means of a second data entry mask.

In particular, in said second mask, the following may be defined:

- the number and the structural composition of the carcass plies which are applied, for example: first ply and second ply, spacing or arrangement, alongside, of the band portions of each ply;

- the number of belt strips, for example first strip and second strip;

- the number of layers of cords at 0° and, for each layer, the number of turns, for example a single layer with a number of turns such as to line the underlying belt strips over their whole width;

- the number and the location of the bead wires and, for each bead, the number of turns, for example a first bead wire applied against the first series of carcass portions and a second bead wire applied against the second series of carcass portions;

- the shape and position of elastomer structural parts, for example tread band, sidewall, anti-abrasive listel.

For each of said elastomer structural parts it is also possible to choose the elastomer material from which they are made.

According to an alternative mode of application of the invention, the structural parts of the cross section are chosen and positioned and their dimensions defined by the program on the basis of operating data of the tyre such as the pressure, the load applied (or the type of vehicle, the speed category, the performance category and so on. This data may be supplied by the client.

The functional parameters consist of the required performance category and the rules or the set of correlation rules or equations associated with each performance category.

For example, said performance categories are selected from a group which includes high performance, comfort, specific grips for dry, wet, snow-covered, icy and other road surfaces.

According to the invention, a tyre may have, associated with it, several performance models, each associated with its own set of correlation equations. In the case where these associations or combinations of models are different within the same tyre, one or more of the correlation equations may be modified or deleted in order to avoid the presence of equations which are incompatible with each other. Correspondingly, the overall performance of the tyre obtained in this way will be a compromise - normally the best compromise - from among the required performance features owing to the practical impossibility of achieving simultaneously the maximum mutually antithetic performance level.

The greater the number of equations in the set and/or the number of sets of equations, the greater will be the possibility of producing tyres which satisfy, as closely as possible, the clients' requests.

Preferably, in this case a tyre will be identified by a performance level, within each performance category, which is assigned a code ranging between a minimum value and a maximum value, for example on scale of 1 to 5.

The absolute value of the performance level corresponding to the values thus coded may vary with the tyre category including size, cost and type (where type is understood as meaning, for example, comfort, sportiness, comfort/sportiness, handling, roadholding in wet conditions and so on).

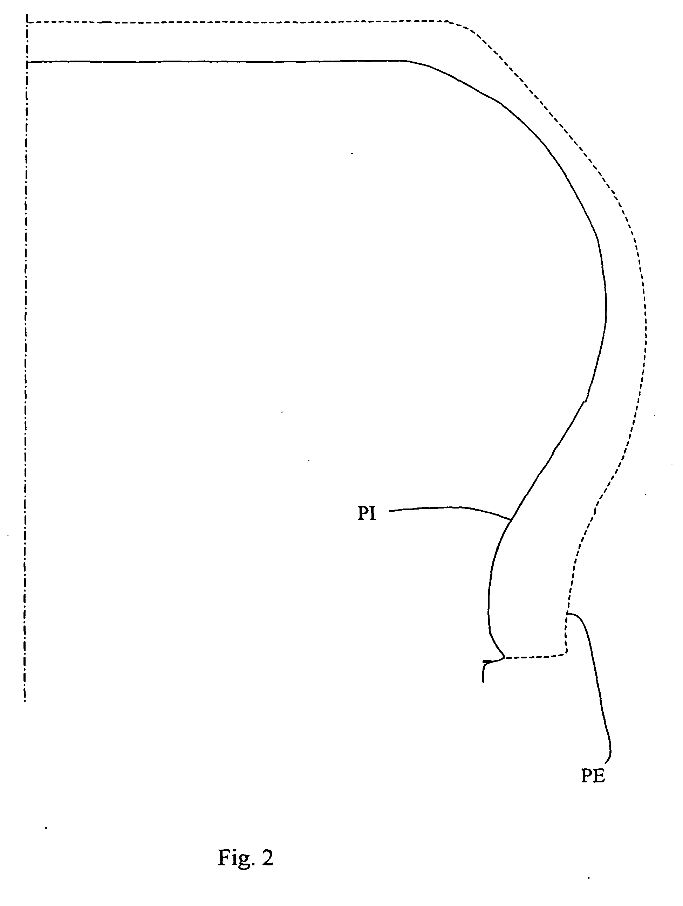

Once these parameters have been entered, the abovementioned design method defines, in particular also graphically, the structure of the tyre being designed: in other words it defines, first of all, the cross section of the tyre by means of the external profile PE and internal profile PI of said tyre (Fig. 2).

It must be noted that said profiles are preferably defined on the basis of a predefined profile: preferably said predefined profile is chosen from the profile of the carcass plies in a predefined condition, for example inflated condition, and the moulding profile of the tyre, as in the case illustrated.

In accordance with the invention, the design of the external profile processed in the manner indicated defines the dimensions of the vulcanization mould: it is stored in a data base or similar instrument and may be sent electronically, in real time, or with a delay after recording on a suitable medium, preferably in real time, to a mould manufacturer who manufactures the corresponding mould.

Within said cross section, the abovementioned design method defines, by means of application of the correlation equations assigned, the profile of the carcass and belt plies, as well as the shape, i.e. the contour profile of the cross section of all the structural parts present in the said cross section.

In particular, in the case of the carcass plies and the belt strips, it determines not only the position of their profile within the cross section of the tyre, but also the progression of the abovementioned profile, defined by a series of radii of curvature. In the case of the carcass ply or plies, this profile corresponds preferably to the equilibrium profile along at least part of its extension, preferably at least in the sidewall portion between shoulder and bead.

The cross section illustrated in Figure 1 was obtained on the basis of the moulding profile of the tyre: the complete design of the tyre showing all the areas occupied by the structural components, in accordance with the moulding profile defined above, and hence the actual dimensions of the vulcanized tyre, in the remainder of the description is defined as being the moulded tyre cross section (MTC design).

The cross section of the moulded tyre is converted into the cross section of the tyre as constructed on the drum, so as to allow completion of the said cross section with filling of the shapes of the structural parts with the corresponding basic components. In the remainder of the description the design of the cross section on the drum is identified as the drum tyre cross section (DTC).

The aforementioned design method automatically converts the MTC design into the DTC design, applying predefined conversion equations which take into account, among other things, characteristics of the materials (such as elasticity of the cords and plasticity of the compounds), any dilation introduced during the vulcanization stage, etc.

Figure 2 shows a design of the profile of the cross section of the tyre comprising the internal profile PI and the external profile PE. In accordance with the invention, the design of the internal profile processed in the manner indicated defines the dimensions of the assembly drum: it is stored in a data base or similar instrument and may be sent electronically, in real time, or with a delay following recording on a suitable medium, preferably in real time, to a drum manufacturer who proceeds with manufacture of the associated drum.

A third data entry mask may allow entry of data which define the internal assembly profile of the tyre and consequently the dimensions of the drum.

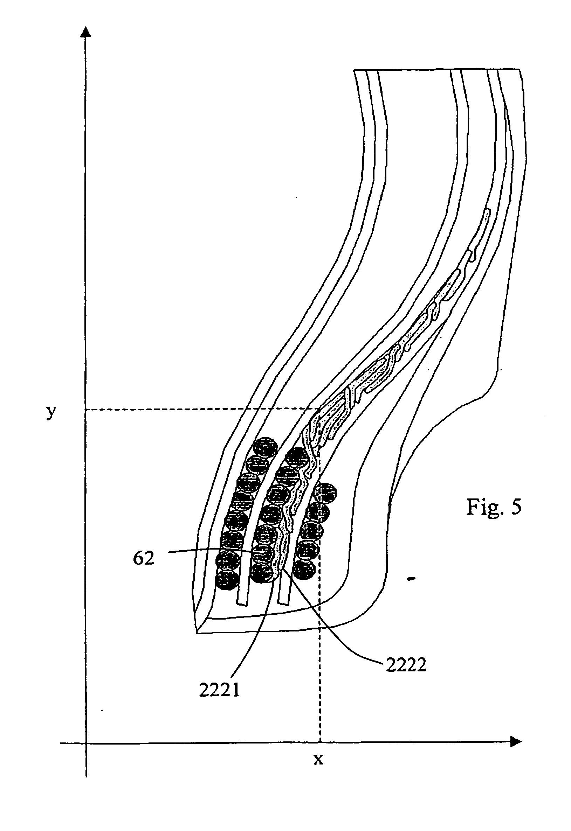

Figure 5 shows the portion of a bead of an MTC design.

The design engineer fills each shape of the structural parts made of elastomer material with a listel of corresponding material by means of the arrangement, next to each other, of a plurality of cross sections of said listel.

Preferably, the dimensions of the basic component to be used, i.e. the aforementioned listel of compound, in particular the width and height of the cross section of said listel, as well as the material from which it is made, are predefined values. Preferably, the abovementioned cross section has maximum dimensions of between 3 and 12 mm. More preferably, this cross section has a substantially rectangular shape, with dimensions of 3x7 mm.

Figure 5 shows the partial deposition of said listel for filling the shape of an elastomer structural part situated in the bead zone of the tyre. The figure shows how filling is performed by means of arrangement next to each other, including overlapping, of a plurality of cross sections of said listel.

A graphics processing program, which may be developed using known methods, provides the operator with the complete design of the cross section of the tyre, the cross section of the shapes of all the structural parts of the tyre and the listel with the aforementioned dimensions.

By means of a manual dragging device, the design engineer arranges the cross sections of the listels inside the area of the shape, superimposing them partially on top of each other. In particular, in Figure 5 the design engineer has started to position a first section 2221 of the listel in the vicinity of the second bead wire 62.

This operation is performed by removing, for example by means of the computer mouse, the section of a graphics window made available by the program and dragging it into the filling shape which is graphically displayed, until it is positioned in the vicinity of its final arrangement position.

The program determines exactly the definitive position of each section, calculating the modification to the shape of said sections, due to the plasticity of the material forming the said listel and caused by any stretching during deposition and by the mutual overlapping between adjacent basic components. This modification in the cross sectional shape is calculated on the basis of the previously stored characteristics of the material from which the listel is made.

At the same time, for each section positioned within the shape, the following are stored:

- the position (x, y) of a significant point, for example the middle point in the bottom side of the listel cross section, with respect to a fixed reference point, for example a pair of Cartesian axes, integral with the drum, and

- the angle of orientation $\alpha$ of the deposited section with respect to a fixed reference point, for example the axis of rotation of the drum.

Figure 4 shows a cross section through the elongate listel 222 showing the point P, the coordinates (x, y) of which are stored, and the angle of orientation $\alpha$.

In Figure 5 it can be seen how the section 2221 of the listel is deformed owing to its contact with the turns of the bead wire 62. At the same time the final position (x, y, $\alpha$) of this part is stored, as defined above. The design engineer at this point removes a further section 2222 of the listel and, using the same methods, arranges it in the vicinity of the first section 2221. The program determines the final position, partially superimposing the additional section 2222 on the first section 2221, deforming it according to its degree of plasticity.

The final position (x, y, $\alpha$) of this section 2222 is also stored. The method continues until all the space intended for this particular structural part has been completely filled.

With this storage operation, which is also of a short duration, in accordance with the invention, the operating procedure which includes the manufacturing instructions necessary for allowing the robot to wind the listel onto the drum with the intended direction and number of turns is automatically generated.

The method is repeated for each structural part which has a listel as a basic component.

These elongate components, in the abovementioned plant, are supplied preferably by an extruder and wound onto the drum with circumferential deposition performed by rotating the drum in front of the extrusion head. Therefore, by drawing within the cross section of the tyre, the area occupied by the cross section of each listel, the actual deposition over the whole tyre by means of rotation of the drum is reproduced.

This technique for filling the shape of the structural parts of the tyre is not limited to the listel of elastomer material, but may be applied to all the basic components applied onto the drum by means of circumferential deposition.

Other basic components, typically the reinforcing cord of the bead wires and the band of cords arranged at 0°, may be inscribed within the cross section of the tyre, and more precisely within the shape of the corresponding structural part by dragging their cross section inside the said shape.

The deposition sequence for each circumferentially deposited structural part comprises the co-ordinates of all the abovementioned points within the cross section of the tyre. During formation of the tyre on the drum, the robotized arm which moves the drum determines, for each complete rotation of the said drum, the change in position from a set of three co-ordinates (x, y, $\alpha$) to the next set of three co-ordinates until deposition of the structural part has been completed. All the structural parts described above are constructed in accordance with a predefined sequence so as to form a new tyre model which is stored in the form of said sequence of successive (radial and circumferential) application of these structural parts onto the assembly drum.

In this way, for each tyre model, information as to the sequence of application of the structural parts and, for each part, information as to the shape, position and material used is provided.

On the basis of the DTC design, the deposition sequences of the basic components are generated separately from each other.

The need to describe the procedures for application of the basic components onto the assembly drum requires the availability of a DTC design. If the initial design is an MTC design, it is converted into a DTC design (tyre on the assembly drum) as indicated above.

At the end of deposition of all the structural components, each tyre model is described by a plurality of operating procedures, each comprising a sequence of manufacturing instructions (comprising machine cycles).

Conveniently, for the purposes of the invention, the various sequences are stored in a data base.

Each of said sequences comprises essentially:

- the type of basic component to be deposited (continuous elongate component or band portion) and therefore the type of deposition (circumferential or radial);

- the dimensions of the component (cross section for the continuous elongate component or cross section and length for the band portion);

- the material to be used (compound for the continuous elongate component or composition of the band portion, if necessary including number and type of associated cords);

- a sequence of handling instructions for an operational handling apparatus (for example the automated arm for circumferential deposition or the working unit for radial deposition).

In accordance with the invention, the design stage generates automatically a plurality of procedures which essentially reproduce the sequences for application of all the structural components, which are determined during the design stage and by means of which the tyre production plant creates the new tyre models.

These procedures, preferably each containing a sequence for application of a structural part, are preferably resident in a data base from where they are suitably taken so as to be sent to a corresponding manufacturing unit of the production plant.

All the information relating to each processed tyre model, according to the invention, is stored in a data base of producible tyre models. The data base may be updated in accordance with needs, data or correlations being added or replaced, for example each time a new tyre model or a different correlation or set of correlations is defined.

In particular, for the purpose of responding automatically to the expected requests of a client, who requires tyres characterized by a complex set of performance features, each associated with a set of correlations, the data base contains sets of correlations and mechanisms for choosing them, if necessary in a hierarchical order, so as to respond individually to the request received.

Preferably, the data base associates with each producible tyre model an SI (specific identity) identification code SI and a plurality of address fields, each of which addresses one of the procedures as defined above.

Preferably, said SI code associates with each producible tyre model a classification corresponding to the structural and functional specifications initially described. For example, for each tyre model stored in the data base, information as to the sizes available, the performance categories, the tread patterns, etc., is provided.

Each time that it is required to design a new tyre model, it is possible to draw from the data base the information relating to the procedures for production of all the tyre models already designed and combine them together in order to check whether one of them, or a combination of them, satisfies the requirements of the new desired model. The provision of the abovementioned information and correlations in a data base allows one to obtain in a short period of time a large number of combinations of all the dimensional, structural and functional parameters of a different type, including those which define a new tyre model which satisfies the predetermined design constraints.

A new tyre model is preferably constructed on the basis of functional rules which are already stored, in terms of correlations between structural constraints or physical and/or dimensional parameters, applying them to a specific reference tyre, which is also already stored, in order to obtain the structures of the new tyre model, the dimensions of which are already defined in terms of absolute value.

Table 1 illustrates a typical example of application of the invention with reference to the design of two different tyres, according to the specific request of a client having requirements not satisfied by the tyre models available on the market.

This request was provided in a traditional manner, although, with the aid of available communications techniques (for example the Internet, similar to that which is happening in various commercial or business sectors), it is possible to receive the said request via a network of computers which are connected together, as described below.

In particular, the request was for a model with good comfort properties (Variant A - Comfort-oriented) and one with good handling properties (Variant B - Handling-oriented), both having a predefined size, in particular with a 16" fit.

In accordance with the invention, two sets of equations, i.e. two groups of correlations between dimensional values of the tyre cross section, were selected beforehand, said groups being defined respectively as COMF_1 (that relating to a comfort-oriented performance) and HAND_1 (that relating to handling-oriented performance).

In a preferred mode of implementation of the invention, the design was not based on a choice of absolute parameters, defined tentatively by the design engineer - a choice which is also possible - but on the acquisition of the parameters relating to an existing tyre, the good handling properties of which were known, but which were of a size different from that desired by the client.

A reference tyre (prototype), size 205/55R16, was chosen, said tyre being close to the size of the new tyres to be designed (245/50R16), in particular having the same fitting diameter as the two new tyres to be made.

The table below specifies the external diameter (D), the fitting diameter (Dc) and the height of the sidewall (Hs) of the three tyres; said values form non-modifiable constraints of the tyres in question.

The table specifies, moreover, the geometrical dimensions considered in the two groups of equations as well as the individual equations of each group. For the reference tyre (prototype) the table specifies the absolute values of these dimensions.

With reference to the two variants of tyres, the table shows the absolute values of the abovementioned dimensions obtained by applying the corresponding equations to the reference values of the prototype.

The laboratory tests and the road tests carried out subsequently on the two variants of tyres showed that the aim of the design was achieved.

It may be observed, in particular, that, for the same overall and fitting dimensions, the handling-oriented tyre has values of the filling height and tread radii which are substantially greater than the corresponding values of the comfort-oriented tyre.

Prototype

| Size | Dp | Dcp | Hsp | Parameter | Value | | Geometric meaning |
|---|---|---|---|---|---|---|---|
| 205/55 R16 | 633 | 405.6 | 114.4 | Cbp | 178.28 | | Tread width |
| | | | | fp | 10.7 | | Tread curvature |
| | | | | R1p | 1091.53 | | 1st tread radius |
| | | | | R2p | 196.47 | | 2nd tread radius |
| | | | | RRp | 28 | | Connecting radius |
| | | | | Ys1p | 45 | | Height of first filling point |
| | | | | Rca(1) | 29 | | First carcass radius |

Variant A - Comfort-oriented | | | | | Equations set: COMF 1 | |

| Size | D | Dc | Hs | Parameter | | Value |
|---|---|---|---|---|---|---|
| 245/50 R16 | 652 | 405.6 | 123.2 | Cb | (Cbp/Hsp)*Hs | 191.9938 |
| | | | | f | (fp/Hsp)*Hs | 11.52308 |
| | | | | R1 | R1p | 1091.53 |
| | | | | R2 | R2p | 196.47 |
| | | | | RR | RRp | 28 |
| | | | | Ys1 | (Ys1p/Hsp)*Hs*1 | 48.46154 |
| | | | | Rca(1)P | (Rca(1)p/RRp) *RR*1.03 | 29.87 |

(continued)

| Variant B - Handling-oriented | | | | Equations set: HAND 1 | | |
|---|---|---|---|---|---|---|
| Size | D | Dc | Hs | Parameter | | Value |
| 245/50 R16 | 652 | 405.6 | 123.2 | Cb | 1.02*(Cbp/Hsp)*HS | 195.8337 |
| | | | | f | fp | 10.7 |
| | | | | R1 | (R1p/Hsp)*Hs | 1175.494 |
| | | | | R2 | (R2p/Hsp)*Hs | 211.5831 |
| | | | | RR | RRp | 28 |
| | | | | Ys1 | (Ys1p/Hsp/*Hs*1.05 | 50.88462 |
| | | | | Rca(1) | (Rca(1)p/RRp)*RR0*.9 | 26.1 |

Owing to the high degree of flexibility of the tyre design and manufacturing method described above, a new form of interface between the clients and the tyre manufacturer is also possible.

In particular, said method allows the production of tyres configured in accordance with the client's requests.

According to the state of the art, the tyre manufacturers provided the market with a limited number of different tyre models, predefined on the basis of previous knowledge, for example on the basis of statistical analyses of the main requests in terms of sizes and performance: the client was able to choose their product from among the models available.

With the new design method it is possible to introduce into the first group of absolute values (as defined above) also specific requests from a client, relating to a limited batch of tyres, also of the order of single units.

These requests may relate to dimensional parameters, such as, for example, the overall dimensions of the tyres, sizes and tread patterns, structural parameters, such as, for example, particular materials, functional parameters, such as definition of the performance categories, for example high-performance models, high-comfort models, models suitable for particular routes and/or road surfaces. In particular, these requests shall be chosen from the range of dimensional values of the tyre and/or with reference to performance models and performance levels for each model. Preferably, the client will be able to choose their requests from among a list of options made available by the tyre manufacturer.

Preferably, the options offered by the manufacturer establish links between the level or levels of performance required, the category of tyre or vehicle intended for the tyre, and the price range which the client is able to afford.

In accordance with the invention, construction parameters obtained from requests forwarded by clients are converted automatically into instructions for the tyre manufacturing process.

In accordance with the invention, these requests may be sent by the client and received by the tyre manufacturer in real time by means of a link between computers via a public line (the Internet) or private line (dedicated line), i.e. via a telecommunications network which connects a processing system of the manufacturer to a processing system of the client.

The method according to the invention is intended both for a client specialized in the sector, such as a car manufacturer or professional dealer, and for clients who have no specific technical or design skills, for example a private individual.

In order to help the client provide the tyre manufacturer with data suitable for the design and construction of tyres corresponding to the same client's requests, advantageously a data entry mask is provided and made available to the client via a telecommunications network, for example in the form of a Web page on an Internet website.

Said mask allows the said data to be introduced and stored in a form which can be integrated into and is operationally homogeneous with the data determined by the manufacturer and which can be immediately processed by the abovementioned processing system of the manufacturer, since it corresponds to the design and production possibilities of the manufacturer who is using the invention described above.

The entry mask preferably comprises one or more sets of preselected questions which are presented in succession or in groups and are designed to identify the main requirements of the client and consequently guide the latter when making their choices; the mask may also comprise an array of predefined options so as to help the client formulate their request in a coherent manner, avoiding situations of incompatibility between the requirements proposed, in particular from a technical point of view, or unsatisfactory results, for example from a cost point of view.

By means of the abovementioned data entry mask which is made available to the client, the client's requests and other information relating thereto, for example, the number of parts to be produced, the dates, the location for delivery, the methods of payment and the like - irrespective as to whether the models requested may require a new design - may be received and introduced into the manufacturer's processing system, so as to modify production planning, combining the new request with the program which is in operation. This allows the client's request to be dealt with very rapidly and using methods which are most suited to the requirements of the client in question.

Preferably, sending of the order by the client (consisting, for example, in one or more clicks on the Web page provided, together with entry of the data relating to the requests and identification of the said client) starts in real time the verification program and modifies the planning program resident in the manufacturer's processing system.

In response to the order received and verification thereof, conveniently the manufacturer's processing system is also able to generate information in response to the client, sending it for example, via the same line or network on which the request was received, said information including, depending on the circumstances, confirmation of acceptance of the order, methods of payment, cost, dates and methods for delivery of the product, or other logistical and cost-related information.

**Claims**

1.    Method for producing tyres satisfying the requirements of a client, said tyres having a tyre structure comprising a set of geometrical forms which characterize a cross section of said tyre and which are associated with each other by means of mathematical functions, said method comprising:

- storing functional rules by means of which said set of geometrical forms interact with each other depending on a category of performance data in terms of correlations between structural constraints or physical and/or dimensional parameters selected from an external diameter, a maximum cord during inflation, a fitting diameter, dimensions of a reinforcing cord, a thickness of a band and cross sectional dimensions of a listel;
- receiving from a client a set of data comprising data identifying the client and data relating to dimensional or performance requirements of a tyre, via a communications line between a client's computer and a manufacturer's computer;
- combining said requests with predefined construction data;
- designing, on the basis of said data received from the client and predefined construction data, said tyre structure by applying said functional rules to a specific reference tyre, in order to obtain the structure of said tyre satisfying said client's requirements;
- generating the constructional procedures relating to said tyre structure;
- carrying out construction of at least one tyre having characteristics which satisfy said requests.

2.    Method according to claim 1, wherein said step of generating the constructional procedures comprises storing geometrical data relating to deposition of a structural part and defined during said design stage.

3.    Method according to Claim 1, wherein said design step comprises generating automatically the manufacturing operating procedures.

4.    Method according to Claim 1, wherein said design step comprises carrying out automatically the manufacture of at least one tyre.

5.    Method according to claim 1, further comprising:

- supplying a client, via a communications line between a client's computer and a manufacturer's computer, with a predefined set of requested data, including:

    • data identifying the client;
    • data relating to a dimensional or performance requirement of a tyre;

- receiving the client's data in response to said requests.

6.    Method according to claim 1, wherein said tyre comprises a plurality of structural parts different from each other in terms of dimensions, composition or position within the cross section of said tyre, said cross section being defined by a radially external profile and by a radially internal profile, each structural part comprising a basic component and one of said structural parts comprising at least one carcass ply arranged within said cross section along a predefined profile, said method including the steps of:

- defining at least one of said profiles on the basis of a group of predefined dimensional constraints;
- defining the remaining profiles of said tyre on the basis of predefined dimensional values of said structural parts;
- defining, within the cross section of said tyre delimited by said external and internal profiles, the shape of said structural parts;
- filling each shape with a basic component depending on the function of the structural part defined by said shape.

**Patentansprüche**

1. Verfahren zum Herstellen von Reifen, die den Anforderungen eines Kunden genügen, wobei die Reifen einen Reifenaufbau mit einem Satz von geometrischen Formen aufweisen, die einen Querschnitt des Reifens charakterisieren und einander mittels mathematischer Funktionen zugeordnet sind, und bei dem Verfahren

   - Funktionsregeln gespeichert werden, mit deren Hilfe der Satz von geometrischen Formen abhängig von einer Kategorie von Leistungsdaten ausgedrückt als Korrelationen zwischen strukturellen Grenzwerten oder physikalischen und/oder abmessungsmäßigen Parametern miteinander interagieren, die ausgewählt sind aus Außendurchmesser, maximale Sehne beim Aufpumpen, Aufpassdurchmesser, Verstärkungskordabmessungen sowie Banddicke und Querschnittsabmessungen eines Deckwulstes,
   - von einem Kunden ein Satz von Daten mit den Kunden identifizierenden Daten und mit sich auf Abmessungs- oder Leistungsanforderungen an einen Reifen beziehenden Daten über eine Kommunikationsleitung zwischen einem Rechner des Kunden und einem Rechner des Herstellers erhalten wird,
   - die Anforderungen mit vorgegebenen Konstruktionsdaten kombiniert werden,
   - auf der Basis der von dem Kunden erhaltenen Daten und der vorgegebenen Konstruktionsdaten der Reifenaufbau durch Anwendung der funktionalen Regeln auf seinen spezifischen Referenzreifen ausgelegt wird, um den Aufbau des Reifens zu erhalten, der den Anforderungen des Kunden genügt,
   - die Baumaßnahmen bezüglich des Reifenaufbaus erstellt werden und
   - der Bau von wenigstens einem Reifen ausgeführt wird, der die Eigenschaften hat, die den Anforderungen genügen.

2. Verfahren nach Anspruch 1, bei welchem bei dem Schritt des Erstellens der Baumaßnahmen geometrische Daten, die sich auf die Ablage eines Bauteils beziehen und während der Auslegungsstufe definiert wurden, gespeichert werden.

3. Verfahren nach Anspruch 1, bei welchem bei dem Auslegungsschritt die Fertigungsablaufmaßnahmen automatisch erstellt werden.

4. Verfahren nach Anspruch 1, bei welchem bei dem Auslegeschritt die Fertigung von wenigstens einem Reifen automatisch ausgeführt wird.

5. Verfahren nach Anspruch 1, bei welchem weiterhin

   - einem Kunden über eine Kommunikationsleitung zwischen einem Rechner des Kunden und einem Rechner des Herstellers ein vorgegebener Satz von angeforderten Daten übermittelt wird, zu denen die den Kunden identifizierenden Daten und die sich auf eine Abmessungs- oder Leistungsanforderung eines Reifens beziehenden Daten gehören, und
   - die Daten des Kunden ansprechend auf die Anforderungen erhalten werden.

6. Verfahren nach Anspruch 1, bei welchem der Reifen eine Vielzahl von Bauteilen aufweist, die sich voneinander hinsichtlich Abmessungen, Zusammensetzung oder Position in dem Querschnitt des Reifens unterscheiden, wobei der Querschnitt durch ein radial äußeres Profil und durch ein radial inneres Profil definiert ist, jedes Bauteil eine Basiskomponente aufweist und eines der Bauteile wenigstens eine Karkassenlage hat, die in der Querschnittsfläche längs eines vorgegebenen Profils angeordnet ist, und bei dem Verfahren

   - wenigstens eines der Profile auf der Basis einer Gruppe von vorgegebenen abmessungsmäßigen Grenzwerten bestimmt wird,
   - die restlichen Profile des Reifens auf der Basis von vorgegebenen Abmessungswerten der Bauteile bestimmt werden,
   - in dem Querschnitt des Reifens, der von dem äußeren und inneren Profil begrenzt wird, die Form der Bauteile bestimmt wird und
- jede Form mit einer Basiskomponente abhängig von der Funktion des Bauteils gefüllt wird, das durch die Form bestimmt ist.

## Revendications

1. Procédé de production de pneus satisfaisant les exigences d'un client, lesdits pneus ayant une structure de pneu comprenant un ensemble de formes géométriques qui caractérisent une section transversale dudit pneu et qui sont associées les unes aux autres au moyen de fonctions mathématiques, ledit procédé comprenant les étapes consistant à :

   - stocker des règles fonctionnelles grâce auxquelles les formes géométriques dudit ensemble interagissent entre elles en fonction d'une catégorie de données de performances en termes de corrélations entre contraintes structurelles ou paramètres physiques et/ou de dimensions choisis parmi un diamètre externe, une corde maximale pendant le gonflage, un diamètre de montage, les dimensions d'un câble de renforcement, une épaisseur d'une bande et les dimensions en coupe d'un bandeau ;
   - recevoir en provenance d'un client un ensemble de données comprenant des données identifiant le client et des données concernant les exigences dimensionnelles ou de performances d'un pneu, via une ligne de télécommunication entre un ordinateur d'un client et un ordinateur d'un fabricant ;
   - combiner lesdites requêtes avec des données de construction prédéfinies;
   - dessiner, en se basant sur lesdites données transmises par le client et les données de construction prédéfinies, ladite structure de pneu en appliquant lesdites règles fonctionnelles à un pneu de référence spécifique, afin d'obtenir la structure dudit pneu satisfaisant lesdites exigences du client ;
   - générer les procédures constructives se rapportant à ladite structure de pneu ;
   - exécuter la construction d'au moins un pneu ayant des caractéristiques qui satisfont lesdites requêtes.

2. Procédé selon la revendication 1, dans lequel ladite étape de génération des procédures constructives comprend le fait de stocker des données géométriques se rapportant à la pose d'une partie structurelle et définies pendant ladite étape de dessin.

3. Procédé selon la revendication 1, dans lequel ladite étape de dessin comprend le fait de générer automatiquement les procédures opératoires de fabrication.

4. Procédé selon la revendication 1, dans lequel ladite étape de dessin comprend le fait d'exécuter automatiquement la fabrication d'au moins un pneu.

5. Procédé selon la revendication 1, comprenant en outre les opérations consistant à :

   - fournir à un client, via une ligne de télécommunication entre un ordinateur d'un client et un ordinateur d'un fabriquant, un ensemble prédéfini de données demandées, comprenant :

      • des données identifiant le client ;
      • des données concernant une caractéristique dimensionnelle ou de performance d'un pneu ;

   - recevoir les données du client en réponse auxdites demandes.

6. Procédé selon la revendication 1, dans lequel ledit pneu comprend une pluralité de parties structurelles différentes les unes des autres dans leurs dimensions, leur composition ou leur position à l'intérieur de la section transversale dudit pneu, ladite section transversale étant définie par un profil radialement externe et par un profil radialement interne, chaque partie structurelle comprenant un composant de base et l'une desdites parties structurelles comprenant au moins une nappe de carcasse placée dans ladite section transversale le long d'un profil prédéfini, ledit procédé comprenant les étapes consistant à :

   - définir au moins l'un desdits profils en se basant sur un groupe de contraintes dimensionnelles prédéfinies ;
   - définir les profils restants dudit pneu en se basant sur des valeurs dimensionnelles prédéfinies desdites parties structurelles ;
   - définir, dans la section transversale dudit pneu délimitée par lesdits profils externe et interne, la forme desdites parties structurelles ;
- remplir chaque forme avec un composant de base d'après la fonction de la partie structurelle définie par ladite forme.

Fig. 1

PI

PE

Fig. 2

Fig. 3

Fig. 4

Fig. 5

y

62

2221

2222

x